# EUROPÄISCHE PATENTSCHRIFT

(11) **EP 3 516 995 B1**
(45) Veröffentlichungstag und Bekanntmachung des Hinweises auf die Patenterteilung: **13.07.2022**
(21) Anmeldenummer: 18210299.6
(22) Anmeldetag: 05.12.2018
(51) Int. Cl.: A47C 7/38, B60N 2/829

(54) **SITZMÖBEL MIT HÖHENVERSTELLBAREM KOPFTEIL**
CHAIRS WITH VERTICALLY ADJUSTABLE HEADREST
SIÈGE À APPUI-TÊTE RÉGLABLE EN HAUTEUR

(30) Priorität: 25.01.2018 DE 102018101721
(43) Veröffentlichungstag der Anmeldung: 31.07.2019
(73) Patentinhaber: Ferdinand Lusch GmbH, 33758 Schloss Holte-Stukenbrock (DE)
(72) Erfinder:
(74) Vertreter: Cohausz & Florack

(56) Entgegenhaltungen:
- EP-A1- 0 931 690
- DE-A1-102014 109 010
- JP-A- 2000 025 504
- US-A- 4 668 014

## Beschreibung

Die Erfindung betrifft ein Sitzmöbel, insbesondere Sessel oder Sofa, mit wenigstens einer Rückenlehne, wenigstens einem Kopfteil und wenigstens einer Kopfteilverstellung, wobei das Kopfteil über die Kopfteilverstellung gegenüber der wenigstens einen Rückenlehne wenigstens von einer unteren Stellung in eine obere Stellung verstellbar gehalten ist, wobei die Kopfteilverstellung zwei höhenverstellbare, das Kopfteil tragende und jeweils über eine separate Führung geführte Stellstreben zum Verstellen des wenigstens einen Kopfteils von der unteren Stellung in die obere Stellung und zurück aufweist.

Sitzmöbel mit höhenverstellbaren Kopfteilen, die auch als Kopfstützen bezeichnet werden, sind in verschiedenen Ausgestaltungen bekannt und ermöglichen dem Benutzer des Möbels, eine bequeme Sitz- und/oder Liegeposition einzunehmen. Typischerweise umfassen diese Sitzmöbel neben dem über eine Kopfteilverstellung höhenverstellbaren Kopfteil ein Gestell und eine Rückenlehne, wobei die Kopfteilverstellung möglichst unsichtbar in das Gestell und/oder die Rückenlehne integriert ist. Bei dem Gestell handelt es sich vorwiegend um ein Chassis, an das Anbauteile wie Seitenteile, wenigstens eine Rückenlehne, wenigstens eine Armlehne und/oder wenigstens ein Sitz montiert sein können. Für gewöhnlich stehen die Chassis selbst auf dem Untergrund auf und umfassen folglich meist wenigstens einen Fuß. Zudem sind die Sitzmöbel meist als Sessel oder Sofa ausgebildet. JP2000025504A zeigt ein höhenverstellbares Kopfteil, welches dem der Erfindung ähnlich ist.

Damit der Benutzer verschiedene bequeme Positionen auf dem Sitzmöbel einnehmen kann, können die Kopfteile höhenverstellbar zwischen wenigstens einer unteren Stellung und wenigstens einer oberen Stellung ausgebildet sein. Beispielsweise kann der Benutzer dann in einer Liegeposition das Kopfteil in die untere Stellung verstellen und in einer Sitzposition in eine obere Stellung verstellen. Beliebige Zwischenstellungen sind auch denkbar.

Zum Verstellen des Kopfteils kann dieses über höhenverstellbare Stellstreben mit der Rückenlehne und/oder dem Gestell verbunden sein. Die Streben sind dann bedarfsweise entlang wenigstens einer Führung geführt, um ein komfortables Verstellen des Kopfteils zu bewirken. Der Komfort wird jedoch zudem durch den Abstand der Stellstreben voneinander beeinflusst. Je breiter der Abstand der Stellstreben ist, desto eher tritt ein Verkanten und damit Verkeilen des Kopfteils und/oder der Kopfteilverstellung auf. Gleichzeitig können mit größeren Abständen zwischen den Stellstreben breitere Kopfteile bereitgestellt werden, was den Komfort für den Benutzer wiederum steigert. Um große Abstände zwischen den Stellstreben zu ermöglichen, sind sehr stabile und massive Führungen vorgeschlagen worden, die ein Verkanten des Kopfteils bzw. der Kopfteilverstellung vermeiden sollen. Vollständig zufriedenstellende Ergebnisse sind hierbei jedoch noch nicht realisiert worden, zumal stabile und massive Führungen zu einer unerwünschten Steigerung der Herstellungskosten führen. Mithin besteht diesbezüglich weiterer Optimierungsbedarf.

Daher liegt der vorliegenden Erfindung die Aufgabe zugrunde, das eingangs genannte und zuvor näher beschriebene Sitzmöbel derart auszugestalten und weiterzubilden, dass die Kopfteile bzw. die Kopfteilverstellungen weniger zum Verkanten bzw. Verkeilen neigen, ohne dadurch unverhältnismäßige Herstellungskosten in Kauf nehmen zu müssen.

Diese Aufgabe ist durch ein Sitzmöbel nach Anspruch 1 gelöst.

Durch die Verwendung von Führungen mit Zahnstangenelementen und Zahnradelementen, die jeweils unterschiedlichen Stellstreben zugeordnet sind, wird für jede Stellstrebe eine definierte Verstellung bereitgestellt. Diese ergibt sich dadurch, dass jedes Zahnradelement an einem zugehörigen Zahnstangenelement abrollt, wobei die Zähne vom Zahnradelement und vom zugehörigen Zahnstangenelement ineinandergreifen. Durch die die Zahnradelemente verbindende Synchronstrebe wird zudem sichergestellt, dass sich die Zahnradelemente stets synchron zueinander bewegen. Mithin werden die Stellstreben synchron zueinander in ihrer Höhe verstellt, so dass ein Verkanten des Kopfteils bzw. der Kopfteilverstellung zuverlässig verhindert werden kann. Mit andern Worten kann durch die Synchronstrebe erreicht werden, dass sich die Zahnradelemente nur synchron zueinander drehen. Ein Zahnradelement dreht sich dann bedarfsweise nie alleine, sondern immer nur zusammen mit dem jeweils anderen Zahnradelement. Auch kann vorgesehen sein, dass die Umdrehungsgeschwindigkeit, die Umfangsgeschwindigkeit und/oder die Winkelgeschwindigkeit der Zahnradelemente jeweils identisch ist. Dies ist konstruktiv besonders einfach durch gleichartige Zahnradelemente und gleichartige Zahnstangenelemente zu erreichen, obwohl grundsätzlich eine unterschiedliche Ausgestaltung der Zahnradelemente und der Zahnstangenelemente auch eine synchrone Bewegung der Stellstreben bei unterschiedlichen Umdrehungsgeschwindigkeiten, Umfangsgeschwindigkeiten und/oder Winkelgeschwindigkeiten zulassen würde.

Die Zahnradelemente müssen nicht zwingend in Form eines Zahnrades mit umlaufenden Zähnen ausgebildet sein. Es kann beispielsweise ausreichen, wenn ein Kreissegment oder ein Bogensegment mit Zähnen versehen und/oder ein Zahnkranz vorgesehen ist. Auch können die Zahnradelemente zusätzliche Elemente zu einem bloßen Zahnrad oder dergleichen aufweisen. Analog dazu ist es nicht zwingend erforderlich, dass das Zahnstangenelement einen linearen Zahnstangenabschnitt aufweist. Der Zahnstangenabschnitt kann auch, wenigstens geringfügig, gebogen oder gekrümmt sein. Auch kann das Zahnstangenelement um weitere Elemente neben dem Zahnstangenabschnitt ergänzt sein. Gleichwohl ist es konstruktiv besonders einfach und somit bevorzugt, wenn das Zahnradelement ein Zahnrad und/oder das Zahnstangenelement eine Zahnstange jeweils im klassischen Sinne aufweist.

Bei einer ersten besonders bevorzugten Ausgestaltung des Sitzmöbels ist die Synchronstrebe koaxial mit den Zahnradelementen verbunden. So wird für die Synchronstrebe nur wenig Bauraum benötigt und kann wenigstens eine identische Umdrehungsgeschwindigkeit, Umfangsgeschwindigkeit und/oder Winkelgeschwindigkeit beider Zahnradelemente sichergestellt werden. Somit kann es nicht zu einem Verkanten und Verkeilen des Kopfteils kommen. In diesem Zusammenhang ist es aus konstruktiver Sicht besonders bevorzugt wenn die Synchronstrebe koaxial zu den Zahnradelementen angeordnet ist. Ein Verstellen des Kopfteils führt dann lediglich zu einer Rotation der Synchronstrebe um deren Längsachse und bedarfsweise einer Höhenverstellung der Synchronstrebe, wodurch Bauraum eingespart werden kann.

Besonders flexibel lassen sich Sitzmöbel mit unterschiedlicher Höhenverstellung des Kopfteils herstellen, wenn wenigstens ein Zahnstangenelement, insbesondere der Länge nach mehrteilig ausgebildet ist. Dann können die Zahnstangenelemente im Falle größerer Hübe einfach aus mehr Teilen zusammengesetzt werden als bei Sitzmöbeln mit geringeren Verstellwegen des Kopfteils. Die Länge des Zahnstangenelements lässt sich also flexibel an den jeweiligen Bedarf anpassen. Besonders einfach und doch zweckmäßig ist es dabei, wenn die Zahnstangenelemente aus zwei Teilen zusammengesetzt sind. Drei oder mehr Einzelteile sind aber auch denkbar. Der modulare Aufbau der Zahnstangenelemente ist dann besonders effektiv, wenn die Zahnstangenelemente aus Gleichteilen, also gleichen oder gleichartigen Einzelteilen aufgebaut sind. Das verringert die Herstellungskosten und bedarfsweise auch die Lagerkosten für die Einzelteile der Zahnstangenelemente. Alternativ oder zusätzlich kann eine einfache Montage der Zahnstangenelemente dadurch erreicht werden, dass die Einzelteile der Zahnstangenelemente zum formschlüssigen Ineinanderstecken ausgebildet sind. Dazu können die gegenüberliegenden Längsenden der Einzelteile korrespondierend zueinander ausgebildete Verriegelungsprofile aufweisen. Diese Verriegelungsprofile sind dann vorzugsweise als korrespondierende Nut/Feder-Profile ausgebildet.

Eine zweckmäßige Flexibilität bei der Montage des Sitzmöbels lässt sich alternativ oder zusätzlich erreichen, wenn wenigstens ein Zahnstangenelement eine Reihe von Aufnahmen zum Anbringen wenigstens eines Endschalters zum Begrenzen des Verstellwegs des Kopfteils in unterschiedlichen Positionen aufweist, und zwar insbesondere für eine motorische Verstellung des Kopfteils. Die Aufnahmen erleichtern das Einschrauben der Endschalter, die mithin leicht an unterschiedlichen aber gleichwohl definierten Stellen vorgesehen werden können. So können einfach unterschiedliche Höhenverstellungen realisiert werden.

Unabhängig davon wird ein zuverlässiges Abschalten eines motorischen Antriebs dann erreicht, wenn ein Endschalter einen Druckknopf zum Betätigen in eine Richtung wenigstens im Wesentlichen parallel zur Synchronstrebe und/oder wenigstens im Wesentlichen parallel zur Drehachse des korrespondierenden Zahnradelements aufweist. Bei einer vertikalen Ausrichtung des Druckknopfs können bereits geringe Positionsabweichungen zu einem unzuverlässigen Auslösen des Endschalters beitragen.

Um stets ein sicheres und zuverlässiges Kämmen von Zahnstangenelement und Zahnradelement sicherzustellen, ist wenigstens ein Zahnradelement so ausgebildet und angeordnet, dass es während des Verstellens des Kopfteils von der unteren Stellung in die obere Stellung und zurück das zugehörige Zahnstangenelement formschlüssig hintergreift, insbesondere umgreift. Zwar können auch andere Elemente, wie etwa die Synchronstange und/oder eine Querstrebe, für einen zuverlässigen Formschluss zwischen den Zahnstangenelementen und den Zahnradelementen sorgen. Dies ist jedoch unter Umständen konstruktiv aufwendiger oder funktional nachteilig. Besonders zweckmäßig ist in diesem Zusammenhang ein Formschluss in zwei senkrecht zueinanderstehenden Raumrichtungen, und zwar insbesondere, wenn die entsprechende Ebene senkrecht zum Zahnstangenelement und/oder wenigstens im Wesentlichen horizontal ausgerichtet ist.

Der Komfort des, insbesondere manuellen, Verstellens für den Benutzer kann gesteigert werden, wenn wenigstens einem Zahnradelement ein Dämpfungselement direkt oder indirekt zugeordnet ist. Dieses Dämpfungselement kann dann dem Verstellen des Kopfteils nach unten einen höheren Widerstand entgegensetzen als einem Verstellen des Kopfteils nach oben. Dies kann etwa durch ein Federmittel oder durch einen Rotationsdämpfer mit einseitigem Freilauf erreicht werden. Letzteres kann in einer Richtung mit einem geringeren Widerstand gedreht werden als in der entgegengesetzten Richtung. Wird beispielsweise das Kopfteil manuell verstellt, kann vorgesehen sein, dass sich das Kopfteil selbstständig von seiner oberen Endstellung in die untere Ausgangsstellung bewegt, wenn eine etwaige Arretierung gelöst wurde. Infolge der Dämpfung kann dann erreicht werden, dass das Kopfteil langsam nach unten fährt. Der Bewegung des Kopfteils zurück in die obere Endstellung wird von der Dämpfung jedoch ein deutlich geringerer Widerstand entgegengesetzt, um das manuelle Ausziehen des Kopfteils in die obere Endstellung nicht unnötig zu erschweren.

Der Kopfteilverstellung und damit dem Kopfteil kann eine gesteigerte Stabilität verliehen werden, wenn die Stellstreben über wenigstens eine Querstrebe fest miteinander verbunden sind. Da die Stellstreben wenigstens über die Kopfstütze verbunden sind, bietet es sich an, wenn die Querstrebe unterhalb des oberen Rands der Rückenlehne und/oder im Bereich der Kopfteilverstellung und/oder im Bereich der Führungen angeordnet ist. Um ergänzende Führungselemente zu vermeiden, kann die Querstrebe gemeinsam mit dem Kopfteil höhenverstellbar ausgebildet und angeordnet sein. Ein weiterer Stabilitätsgewinn kann dabei bedarfsweise durch das Verbinden der Stellstreben mit den Führungen über die Querstrebe erreicht werden.

Um das Kopfteil bei einer manuellen Verstellung desselben wenigstens in der oberen Endstellung und/oder der unteren Ausgangsstellung des Kopfteils arretieren zu können, kann ein Hubsteller vorgesehen sein. Konstruktiv einfach ist es dabei, wenn der Hubsteller mit der Querstrebe und/oder der Synchronstrebe verbunden ist. Der Hubsteller weist dabei eine Lasche und eine Aufnahme für die Lasche auf, wobei die Lasche gegenüber der Aufnahme ausgezogen werden kann, um eine Höhenverstellung des Kopfteils zu ermöglichen. Gleichzeitig kann die Lasche in wenigstens einer Stellung durch die Wechselwirkung der Lasche mit der Aufnahme arretiert werden. Es wird also insbesondere vermieden, dass die Kopfstütze versehentlich in Schwerkraftrichtung nach unten rutscht.

Funktional und konstruktiv bevorzugt ist es dabei, wenn der Hubsteller wenigstens in der unteren und/oder der oberen Stellung in Schwerkraftrichtung klemmend und/oder formschlüssig arretierbar ist. Die klemmende Arretierung kann durch eine Keilwirkung zwischen der Lasche und der Aufnahme erreicht werden, während die formschlüssige Arretierung durch eine Rastverbindung herbeigeführt werden kann. Die Hubsteller können ganz unabhängig davon in mehreren Positionen arretiert werden, um dem Benutzer mehrere Stellungen des Kopfteils zur Auswahl anzubieten. Über ein formschlüssiges Arretieren des Hubstellers kann dabei einfach eine stufenweise Arretierung und Verstellung des Hubstellers erreicht werden, während die klemmende Arretierung problemlos ein stufenloses Arretieren und Verstellen ermöglicht. Unabhängig davon, ob ein Hubsteller für eine formschlüssige oder klemmende Arretierung vorgesehen ist, bietet es sich an, wenn beim Verstellen des Hubstellers in eine Endstellung zwangsweise ein Auslösemechanismus betätigt wird, der zu einem Entsperren von Lasche und Aufnahme führt, so dass der Hubsteller wieder zurück in die Ausgangsstellung verstellt werden kann. Durch das Verstellen des Hubstellers in die Ausgangsstellung kann dann der Auslösemechanismus erneut zwangsweise betätigt werden, und zwar um das Entsperren von Lasche und Aufnahme wieder aufzuheben, so dass es wieder zu einem Arretieren des Hubstellers kommen kann. In diesem Zusammenhang wird vollumfänglich auf die Offenbarung der DE 10 2014 109 010 A1 verwiesen. Ein formschlüssiger bzw. rastender Hubsteller ist dagegen beispielhaft in der DE 87 07 257 U1 beschrieben.

Eine komfortable und zuverlässige Verstellung des Kopfteils kann beispielsweise erreicht werden, wenn die Kopfteilverstellung über einen motorischen, insbesondere elektromotorischen, Antrieb von wenigstens der unteren Stellung in die obere Stellung und zurück angetrieben ist. Dabei erlaubt ein entsprechender motorischer Antrieb zudem problemlos ein stufenloses Verstellen des Kopfteils, und zwar sowohl nach oben als auch nach unten. Eine konstruktiv einfache Ausgestaltung sieht dabei vor, dass der motorische Antrieb dazu ausgebildet ist, die Synchronstange, insbesondere direkt, in Rotation zu versetzen. Dies spart Bauraum und erhöht die Zuverlässigkeit. Alternativ oder zusätzlich kann der motorische Antrieb ein mit einem Zahnradelement kämmendes Antriebszahnrad antreiben. So lässt sich sehr präzise das Zahnradelement über das Antriebszahnrad in Drehung versetzen, und zwar bedarfsweise in entgegengesetzte Richtungen.

Zur konstruktiven Vereinfachung und Einsparung von Bauraum kann der motorische Antrieb mit der Kopfteilverstellung höhenverstellbar ausgebildet sein. Dies bedeutet, dass der motorische Antrieb nicht ortsfest im Sitzmöbel montiert ist, sondern korrespondierend zur Verstellung des Kopfteils höhenverstellt wird. Dies lässt sich einfach realisieren, wenn der motorische Antrieb an einem beweglichen Teil der Kopfteilverstellung festgelegt wird. Hierbei kommen aus konstruktiver Sicht insbesondere die Synchronstrebe und/oder die Querstrebe in Betracht.

Durch die Verstellung der Höhe des Kopfteils kann zudem die Neigung des Kopfteils und/oder die Anordnung des Kopfteils vor und zurück verändert werden, was mit einem Komfortgewinn für den Benutzer einhergehen kann. Dies lässt sich beispielsweise problemlos erreichen, wenn die Stellstreben in der unteren Stellung des Kopfteils und der oberen Stellung des Kopfteils nach vorne bezogen auf das Sitzmöbel geneigt sind, und zwar insbesondere für den Fall, dass die Stellstreben in der oberen Stellung des Kopfteils weiter nach vorne geneigt sind als in der unteren Stellung des Kopfteils, was einfach durch eine entsprechend angeordnete Führung der Stellstreben an der Rückenlehne ermöglicht werden kann. Alternativ oder zusätzlich können die Stellstreben zwischen der unteren Stellung des Kopfteils und der oberen Stellung des Kopfteils schwenkbar von der Kopfteilverstellung gehalten sein, was das Neigen des Kopfteils bei der Höhenverstellung des Kopfteils begünstigt. Besonders zweckmäßig ist es in diesem Zusammenhang aus konstruktiver Sicht, wenn die Stellstreben um die Führung und/oder die Rückenlehne schwenkbar angeordnet sind.

Das Kopfteil kann alternativ oder zusätzlich aus Komfortgründen, insbesondere wenigstens von einer hinteren Stellung in eine vordere Stellung, schwenkbar vorgesehen sein, was sich in einfacher und zuverlässiger Weise durch ein Rastgelenk erreichen lässt. Das Rastgelenk kann das Kopfteil dann wenigstens in der vorderen Stellung und/oder der hinteren Stellung arretieren. Entsprechende Rastgelenke weisen korrespondierende Verzahnungen auf, die miteinander kämmen und beim Verstellen des Rastgelenks in einer Richtung aneinander abgleiten. Das Verstellen des Rastgelenks in der Gegenrichtung führt zu einem sperrenden Eingriff der Verzahnungen und einem Arretieren des Rastgelenks in der entsprechenden Stellung. Durch Verstellen des Rastgelenks können die Verzahnungen zwangsweise über einen Auslösemechanismus außer Eingriff gebracht werden. So lässt sich das Rastgelenk zurück in die Ausgangsstellung verstellen, wodurch die Auslösemechanik die Verzahnungen zwangsweise wieder in Eingriff bringt. Nun lässt sich das Rastgelenk wieder schrittweise in Richtung der Endstellung verstellen und in wenigstens einer Stellung mechanisch durch sperrenden Eingriff der Verzahnungen ineinander arretieren. Anstelle eines solchen reinen Rastgelenks kann auch ein sogenanntes Rastklemmgelenk vorgesehen sein. Bei Rastklemmgelenken erfolgt die eigentliche Verstellung ebenfalls unter sperrendem Eingriff zweier in Einstellrichtung aneinander abgleitender Verzahnungen. Das Zurückverstellen des Rastklemmgelenks erfordert es jedoch nicht der Verzahnungen außer Eingriff zu bringen. Es müssen lediglich die Klemmkräfte des Rastklemmgelenks überwunden werden, um die ansonsten klemmend gegeneinander gehaltenen Hebel des Rastklemmgelenks gegeneinander in Richtung einer Ausgangsstellung zurück zu verstellen. Ein solches Rastklemmgelenk ist beispielsweise in der deutschen Patentanmeldung DE 10 2011 017 301 A1 beschrieben, auf deren Offenbarungsgehalt vorliegend vollumfänglich Bezug genommen wird. Ergänzend wird noch darauf hingewiesen, dass hier grundsätzlich auf die sperrenden Verzahnungen verzichtet werden könnte, wenn eine Verstellung in beiden Richtungen durch ein Überwinden von Klemmkräften eingeleitet wird. Man spricht in diesem Zusammenhand auch von sogenannten Klemmgelenken oder Reibgelenken.

Anstelle eines Rastbeschlags kann auch ein motorischer Antrieb zum Schwenken des wenigstens einen Kopfteils vorgesehen sein, was ein komfortables Schwenken des Kopfteils in entgegengesetzte Richtungen erlaubt. Um Bauraum zu sparen, kann der motorische Antrieb in das Kopfteil integriert sein. Für einen einfachen und zuverlässigen Betrieb kann es sich anbieten, wenn ein Kopfteilzahnradelement des motorischen Antriebs mit einem gebogenen Zahnstangenelement eines schwenkbaren Abschnitts des Kopfteils zum Schwenken des Kopfteils kämmt.

Wenn wenigstens ein Teil einer Stellstrebe über den motorischen Antrieb drehbar ausgebildet ist, kann diese Drehung der Stellstrebe über eine Übertragung in ein Schwenken des wenigstens einen Kopfteils umgesetzt werden. Die Übertragung kann dabei der Einfachheit halber konische, miteinander kämmende Zahnräder aufweisen, um die Drehung der Stellstreben für das Schwenken des Kopfteils um einen bestimmten Winkel, insbesondere etwa 90°, umzulenken.

Eine kompakte Bauform des Sitzmöbels lässt sich beispielsweise dadurch erreichen, dass die Kopfteilverstellung wenigstens abschnittsweise senkrecht über wenigstens einem Sitz, insbesondere über wenigstens einem Sitzpolster, angeordnet ist. Dann kann der bedarfsweise verschiebliche Sitz unter die Kopfteilverstellung geschoben werden, was zu einer schmaleren Bauform des Rückens des Sitzmöbels führt. Alternativ oder zusätzlich können die Stellstreben wenigstens 0,5 m, vorzugsweise wenigstens 0,8 m, insbesondere wenigstens 1,2 m, voneinander beabstandet sein. Je breiter der Abstand ist, desto mehr kommen die vorbeschriebenen Vorteile zum Tragen und desto komfortabler ist es für den Benutzer. Letzteres gilt insbesondere auch für den bevorzugten Fall, dass das Sitzmöbel als Polstermöbel ausgebildet ist.

Nachfolgend wird die Erfindung anhand einer lediglich Ausführungsbeispiele darstellenden Zeichnung näher erläutert. In der Zeichnung zeigt
- Fig. 1: ein erstes erfindungsgemäßes Sitzmöbel in einer perspektivischen Ansicht,
- Fig. 2A-B: eine manuelle Kopfteilverstellung des Sitzmöbels aus Fig. 1 in perspektivischen Detailansichten,
- Fig. 3A-B: eine Führung der Kopfteilverstellung aus Fig. 2 in einer perspektivischen Ansicht und in einer Draufsicht,
- Fig. 4A-B: eine motorische Kopfteilverstellung eines zweiten erfindungsgemäßen Sitzmöbels mit dem Kopfteil in einer oberen Endstellung in einer Frontalansicht und einer Seitenansicht,
- Fig. 5A-B: die motorische Kopfteilverstellung gemäß Fig. 4 mit dem Kopfteil in einer unteren Ausgangsstellung in einer Frontalansicht und einer Seitenansicht,
- Fig. 6A-C: mehrere Details der Kopfteilverstellung gemäß Fig. 4 in vertikalen Schnittansichten und
- Fig. 7A-B: eine motorische Kopfteilverstellung eines dritten erfindungsgemäßen Sitzmöbels in perspektivischen Detailansichten.

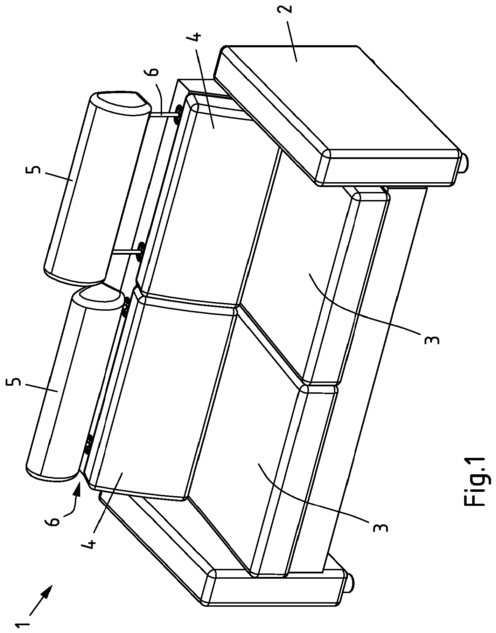

In der Fig. 1 ist ein Sitzmöbel 1 in Form eines Sofas mit einem Gestell 2, einem Sitz 3, einer oberhalb des Sitzes 3 angeordneten Rückenlehne 4 und zwei oberhalb der Rückenlehne 4 angeordneten, höhenverstellbaren Kopfteilen 5 dargestellt. Das linke Kopfteil 5 befindet sich in einer unteren Ausgangsstellung und in einem nach vorne geneigten Zustand, während sich das rechte Kopfteil 5 in einer oberen Endstellung und in einem nach hinten geneigten Zustand befindet. Vorliegend kann unter nach vorne und nach hinten geneigt eine entsprechende Neigung gegenüber der Vertikalen gemeint sein. Es kann dadurch aber auch nur zum Ausdruck kommen, ob das Kopfteil 5 nach vorne oder nach hinten geschwenkt ist. Es kommt dann nur auf die relative Ausrichtung des Kopfteils 5 im nach vorne und nach hinten geneigten Zustand an, ohne dass es dabei auf die absolute Ausrichtung zur Vertikalen ankommt, und zwar sowohl im nach vorne als auch nach hinten geneigten Zustand. Die Kopfteile 5 sind in beiden Fällen von Stellstreben 6 getragen, mit deren Hilfe die Kopfteile 5 von der unteren Ausgangsstellung in die obere Endstellung und zurück verstellt werden können.

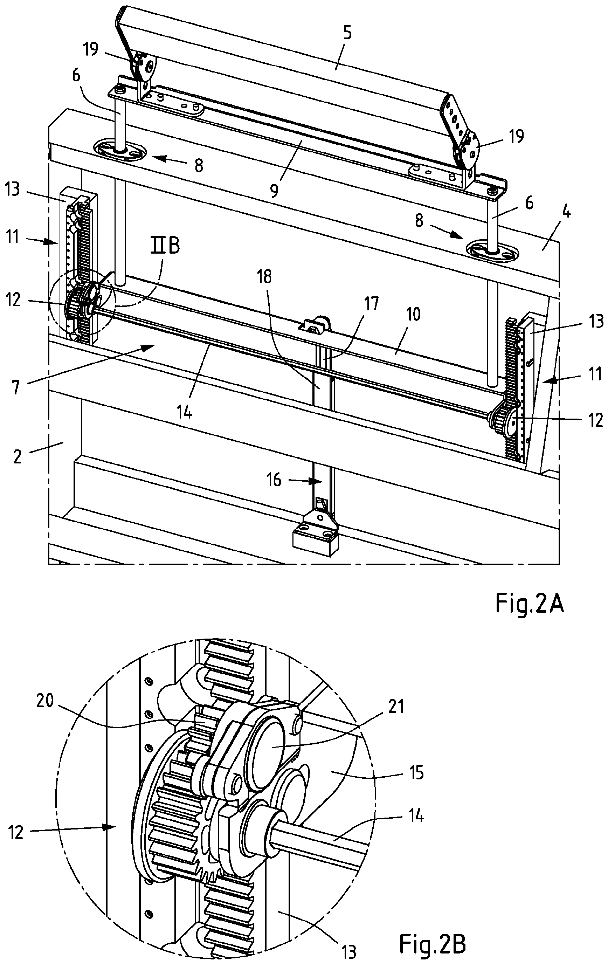

In den Fig. 2A-B sind Details einer manuellen Kopfteilverstellung 7 des Sitzmöbels 1 dargestellt, wobei der besseren Anschaulichkeit halber das Polster des Sitzmöbels 1 weggelassen worden ist. Die Stellstreben 6 der Kopfteilverstellung 7 sind durch Öffnungen 8 in der Rückenlehne 4 hindurchgeführt und im Bereich ihrer oberen Enden ebenso wie im Bereich ihrer unterer Enden über Querstreben 9,10 miteinander verbunden. Die obere Querstrebe 9 ist dabei Teil des Kopfteils 5, während die untere Querstrebe 10 Teil der Kopfteilverstellung 7 ist. Die Kopfteilverstellung 7 weist zudem jeder Stellstrebe 6 zugeordnet eine Führung 11 auf, welche der Höhenverstellbarkeit des Kopfteils 5 und der Stellstreben 6 dient.

Die Führungen 11 umfassen ein Zahnradelement 12, das fest mit der zugehörigen Stellstrebe 6 verbunden ist, und ein Zahnstangenelement 13, das fest mit dem Gestell 2 bzw. der Rückenlehne 4 des Sitzmöbels 1 verbunden ist und in kämmendem Eingriff mit dem Zahnradelement 12 steht. Zudem sind die beiden Zahnradelemente 12 der dargestellten Kopfteilverstellung 7 über eine koaxial angeordnete Synchronstrebe 14 koaxial verbunden. Auf diese Weise wird erreicht, dass sich die Zahnradelemente 12 korrespondierend und mit gleicher Umdrehungsgeschwindigkeit drehen. Während die Zahnradelemente 12 sich drehen, kämmen sie mit den zugehörigen Zahnstangenelementen 13 und rollen an diesen nach oben oder unten ab, wodurch sich das angeschlossene Kopfteil 5 anhebt oder senkt. Die Zahnradelemente 12 sind ferner so ausgebildet, dass sie die zugehörigen Zahnstangenelemente 13 mit Verbindungsabschnitten 15 umgreifen und so senkrecht zu den Zahnstangenelementen 13 einen Formschluss zwischen den Zahnradelementen 12 und den Zahnstangenelementen 13 bilden. Der Formschluss wirkt vorliegend wenigstens im Wesentlichen in einer horizontalen Ebene, und zwar in zwei senkrecht zueinander stehenden Raumrichtungen.

Das dargestellte und insoweit bevorzugte Kopfteil 5 kann lediglich mechanisch verstellt werden. Jedoch ist eine stufenlose Höhenverstellung des Kopfteils 5 möglich. Damit das Kopfteil 5 in einer bestimmten Stellung nicht versehentlich nach unten rutscht, ist die Kopfteilverstellung 7 mit einem Hubsteller 16 versehen. Beim dargestellten und insoweit bevorzugten Sitzmöbel 1 ist die Lasche 17 des Hubstellers 16 höhenverschieblich an der Querstrebe 10 der Kopfteilverstellung 7 und die Aufnahme 18 des Hubstellers 16 ortsfest am Gestell 2 des Sitzmöbels 1 festgelegt. Dabei ist die Lasche 17 gegenüber der Aufnahme 18 ausziehbar. Wird die Lasche 17 jedoch zurück in die Aufnahme 18 geschoben, so wird die Lasche 17 klemmend in der entsprechenden Position gehalten. In der ausgezogenen Endstellung des Hubstellers 16 wird dann jedoch ein Auslösemechanismus aktiv, der ein Zurückverstellen in die eingeschobene Ausgangsstellung des Hubstellers 16 erlaubt, in der der Auslösemechanismus erneut aktiviert und der Hubsteller 16 entsprechend zurückgesetzt wird, um nach einem erneuten teilweisen Ausziehen der Lasche 17 aus der Aufnahme 18 wieder klemmend gehalten zu werden. Der Hubsteller 16 ist vorzugsweise entsprechend der DE 10 2014 109 010 A1 ausgebildet.

Das dargestellte und insoweit bevorzugte Kopfteil 5 ist nicht nur höhenverstellbar, sondern auch unabhängig von der Höhenverstellung schwenkbar ausgebildet. Dazu weist das Kopfteil 5 an gegenüberliegenden Seiten jeweils ein Rastgelenk 19 auf, das ein schrittweises Schwenken des Kopfteils 5 ermöglicht und ein versehentliches Zurückschwenken des Kopfteils 5 verhindert. Dies ist jedoch erst nach dem Verstellen des Rastgelenks 19 in die vordere Endstellung möglich, wobei ein Auslösemechanismus zwei Verzahnungen außer Eingriff bringt. Dann kann das Rastgelenk 19 in die hintere Ausgangsstellung zurückgestellt werden, wo die Auslösemechanik erneut betätigt wird, so dass die Verzahnungen wieder in Eingriff miteinander gelangen können. Wird das Kopfteil 5 wieder nach vorne geschwenkt, gleiten die Verzahnungen aneinander ab. Wird das Kopfteil 5 jedoch in der Gegenrichtung belastet, bilden die Verzahnungen einen sperrenden gegenseitigen Eingriff. Ein beispielhaftes Rastgelenk 19 der beschriebenen Art ist in der DE 20 2007 006 758 U1 näher beschrieben.

Insbesondere in der Detailansicht gemäß Fig. 2B ist ein Dämpfungszahnrad 20 dargestellt, das über das ebenfalls dargestellte Zahnradelement 12 angetrieben wird. Dazu stehen das Zahnradelement 12 und das Dämpfungszahnrad 20 in einem kämmenden Eingriff. Das Dämpfungszahnrad 20 ist dabei über ein Dämpfungselement 21 an der Führung 11 und oder Querstrebe 10 befestigt, die dem Drehen des Dämpfungszahnrads 20 beim Verstellen des Kopfteils 5 nach oben einen deutlich geringeren Widerstand entgegenbringt als beim Verstellen des Kopfteils 5 nach unten. Damit wird das Verstellen des Kopfteils 5 nach unten anders als das Verstellen des Kopfteils 5 nach oben gedämpft. Das Zahnradelement 12 wird damit indirekt gedämpft. Wenn das Dämpfungselement 21 in das Zahnrad des Zahnradelements 12 integriert wäre, ergäbe sich eine direkte Dämpfung des Zahnradelements 12.

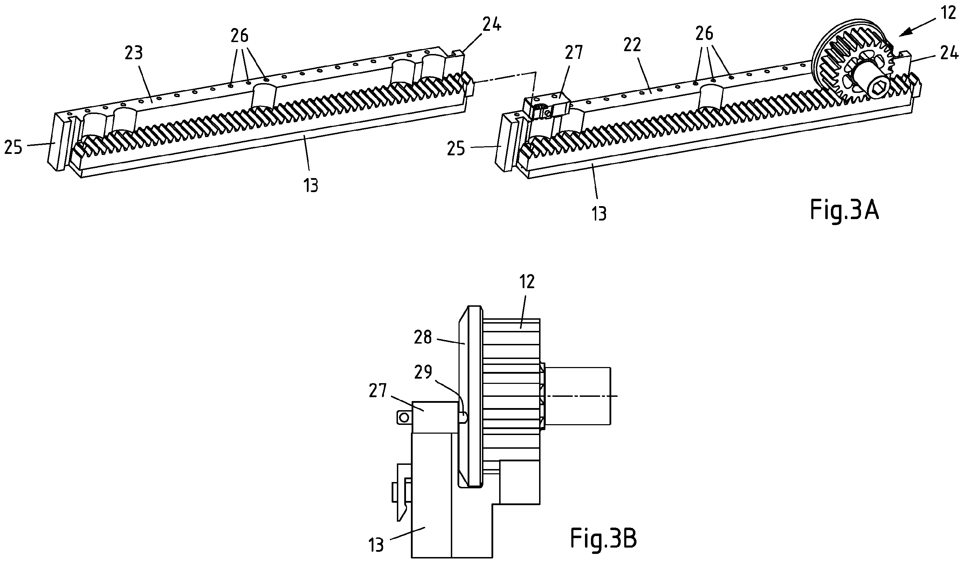

In der Fig. 3A-B ist ein Detail der Führung 11 dargestellt. Das dargestellte und insoweit bevorzugte Zahnstangenelement 13 ist linear und zweiteilig ausgebildet. Die beiden Einzelteile 22,23 des Zahnstangenelements 13 entsprechen einander identisch und sind mit korrespondierenden Verriegelungsprofilen 24,25 formschlüssig ineinandergesteckt. Zudem sind entlang des Zahnstangenelements 13, insbesondere in regelmäßigen Abständen, Aufnahmen 26 für einen Endschalter 27 vorgesehen. Über die Aufnahmen 26 können Endschalter 27 einfach und schnell sowie an unterschiedlichen vorgegebenen Positionen mit dem Zahnstangenelement 13 verschraubt werden, um die Endschalter 27 ortsfest zu positionieren. Die Endschalter 27 sind bei einem motorischen Verstellen des Kopfteils 5 zweckmäßig, um das Verstellen zu beenden, wenn das Zahnradelement 12 bzw. das Kopfteil 5 eine obere Endstellung oder eine untere Ausgangsstellung erreicht hat. Bei einer rein manuellen Verstellung des Kopfteils 5 kann auf Endschalter 27 verzichtet werden. Das dargestellte und insoweit bevorzugte Zahnradelement 12 weist ein seitliches Schild 28 mit einem größeren Durchmesser als der Zahnkranz des Zahnradelements 12 auf, das beim Erreichen des Endschalters 27 einen Druckknopf 29 parallel zur Drehachse des Zahnradelements 12 verschiebt, um den Endschalter 27 auszulösen.

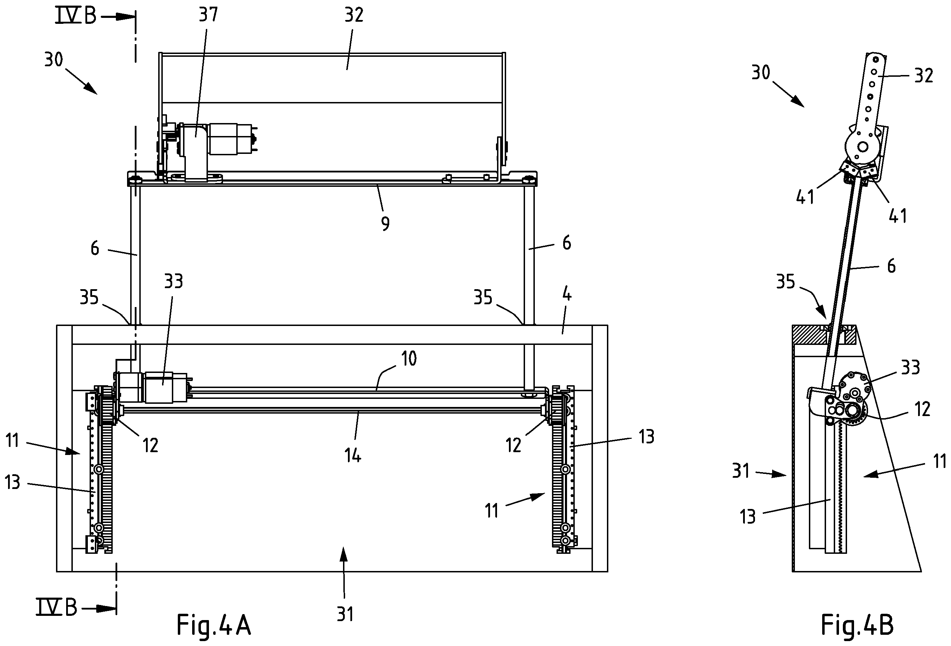

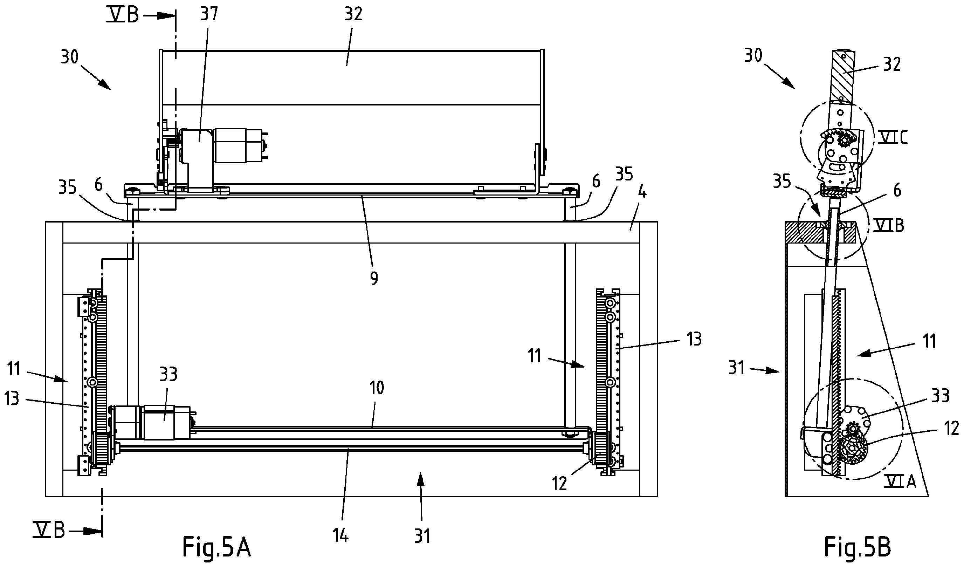

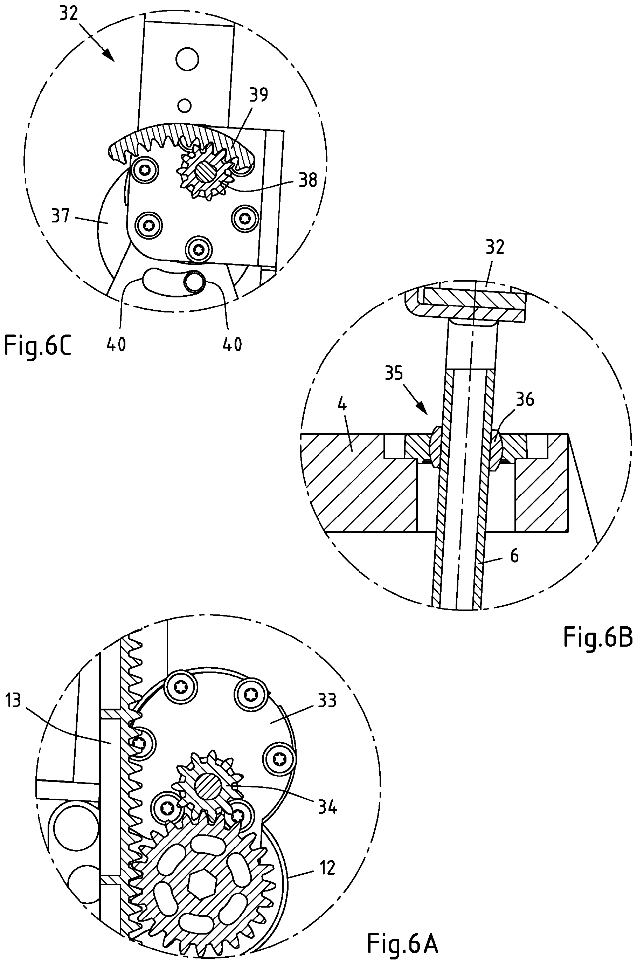

In den Fig. 4A-B ist ein alternatives Sitzmöbel 30 mit einer alternativen Kopfteilverstellung 31 dargestellt. Die Kopfteilverstellung 31 ist sehr ähnlich zu der zuvor beschriebenen Kopfteilverstellung 7 aufgebaut, weshalb gleiche Bauteile auch mit gleichen Bezugszeichen versehen sind. Die in der oberen Endstellung dargestellte Kopfteilverstellung 31 erlaubt eine elektromotorische Höhenverstellung und davon unabhängig ein elektromotorisches Schwenken des Kopfteils 32 vor und zurück. Der motorische Antrieb 33 für die Höhenverstellung des Kopfteils 32 ist an der Querstrebe 10 zwischen den Stellstreben 6 der Kopfteilverstellung 31 festgelegt und/oder befestigt. Mithin fährt der motorische Antrieb 33 beim Verstellen des Kopfteils 32 mit diesem hoch und runter. Hierzu wird auf die Fig. 5A-B verwiesen, die dasselbe Sitzmöbel 30 mit der Kopfteilverstellung 31 in der unteren Ausgangsstellung darstellt. Insbesondere in der Fig. 5B und der entsprechenden Detailansicht in Fig. 6A ist zudem dargestellt, dass der elektromotorische Antrieb 33 ein Antriebszahnrad 34 antreibt, das in Eingriff mit dem Zahnradelement 12 steht und dieses so in die gewünschte Richtung dreht. Daraufhin rollt das Zahnradelement 12 nach oben oder unten an dem Zahnstangenelement 13 ab.

Die Stellstreben 6 sind zudem in der unteren Ausgangsstellung und in der oberen Endstellung gegenüber der Durchführung 35 der Stellstreben 6 an der Rückenlehne 4 nach hinten versetzt an den jeweiligen Führungen 11 festgelegt. So wird erreicht, dass das Kopfteil 32 gleichzeitig nach oben und vorne sowie nach unten und hinten verstellt werden kann. Bei der dargestellten Ausgestaltung des Sitzmöbels 30 führt das Kopfteil 32 bei der Höhenverstellung eine Pendelbewegung nach vorne und zurück aus. Um hierbei oder grundsätzlich ein Verkeilen der Stellstreben 6 an der Rückenlehne 4 zu vermeiden, kann entweder ein ausreichendes Spiel und/oder eine Lagerung der Stellstreben 6 an der Rückenlehne 4 über Kugelkalotten 36 vorgesehen sein. Letztes ist insbesondere in der Detailansicht der Fig. 6B dargestellt. Des Weiteren sind die Stellstreben 6 um eine wenigstens im Wesentlichen horizontale Achse und/oder eine zur Drehachse des Zahnradelements 12 wenigstens im Wesentlichen parallele Achse schwenkbar an der Führung 11 gelagert.

Unabhängig von der Höhenverstellung des Kopfteils 32 kann dieses auch vor und zurück geschwenkt werden, wozu ein weiterer motorischer, insbesondere elektromotorischer, Antrieb 37 vorgesehen ist. Der motorische Antrieb 37 ist fest in das Kopfteil 32 integriert und wird mit diesem hoch und runter verstellt. Dazu ist der motorische Antrieb 37 an einer Querstrebe 9 montiert und dreht ein Kopfteilzahnradelement 38, das mit einer gebogenen Zahnstange 39 des Kopfteils 32 kämmt. So kann das Kopfteilzahnradelement 38 durch Drehen in die entsprechende Richtung das Kopfteil 32 nach vorne und nach hinten schwenken. Dies ist insbesondere in der Fig. 6C dargestellt. Dort sind auch zwei Anschläge 40 dargestellt, die das Schwenken des Kopfteils 32 in der vorderen Endstellung und der hinteren Ausgangstellung begrenzen. In diesen Positionen werden zudem die in der Fig. 4B dargestellten Endschalter 41 wirksam und schalten den motorischen Antrieb 37 ab.

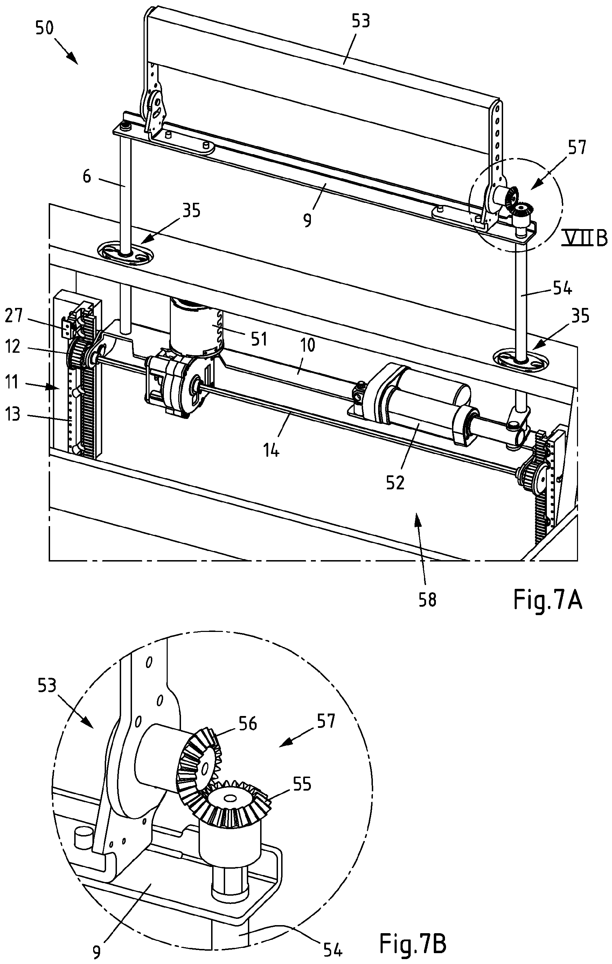

In den Fig. 7A-B ist ein Abschnitt eines weiteren alternativen Sitzmöbels 50 dargestellt. Auch hier werden wegen der großen Ähnlichkeit wiederum gleiche Bauteile mit gleichen Bezugszeichen versehen. Ein wesentlicher Unterschied besteht jedoch in den elektromotorischen Antrieben 51,52. Der motorische Antrieb 51 der Höhenverstellung treibt nicht wie in den Fig. 4 bis 6 ein Antriebszahnrad 34, sondern direkt die Synchronstrebe 14 an, die drehfest und konzentrisch mit den Zahnradelementen 12 bzw. den Zahnkränzen der Zahnradelemente 12 verbunden ist. Festgelegt ist der motorische Antrieb 51 jedoch an der unteren Querstrebe 10 zwischen den Stellstreben 6.

Der motorische Antrieb 52 zum Schwenken des Kopfteils 53 ist ebenfalls an der unteren Querstrebe 10 zwischen den Stellstreben 6,54 festgelegt und dreht wenigstens abschnittsweise die zugeordnete Stellstrebe 54 um deren Längsachse. Die Stellstrebe 54 ist an ihrem oberen Ende mit einem sich konisch verjüngenden Zahnkranz 55 versehen, der mit einem korrespondierenden, sich ebenfalls konisch verjüngenden Zahnkranz 56 einer Übertragung 57 zur Übertragung der Drehung der Stellstrebe 54 in ein Schwenken des Kopfteils 53 in kämmendem Eingriff steht. So wird die wenigstens im Wesentlichen vertikale Drehung der Stellstrebe 54 in ein Schwenken um eine wenigstens im Wesentlichen horizontale Achse umgesetzt. Andere Winkelbeziehungen wären jedoch denkbar. Bevorzugt ist die Übertragung 57, bedarfsweise der Kopfteilverstellung 58, wie in der Fig. 7B als Winkelgetriebe oder Kegelradgetriebe ausgebildet.

Auf ein Rastgelenk, wie dies in der Fig. 2A dargestellt ist, wird bei den Sitzmöbeln gemäß Fig. 7A und den Fig. 4A-5B verzichtet.

### Bezugszeichenliste

- 1: Sitzmöbel
- 2: Gestell
- 3: Sitz
- 4: Rückenlehne
- 5: Kopfteil
- 6: Stellstrebe
- 7: Kopfteilverstellung
- 8: Öffnung
- 9,10: Querstrebe
- 11: Führung
- 12: Zahnradelement
- 13: Zahnstangenelement
- 14: Synchronstrebe
- 15: Verbindungsabschnitt
- 16: Hubsteller
- 17: Lasche
- 18: Aufnahme
- 19: Rastgelenk
- 20: Dämpfungszahnrad
- 21: Dämpfungselement
- 22,23: Einzelteil
- 24,25: Verriegelungsprofil
- 26: Aufnahmen
- 27: Endschalter
- 28: Schild
- 29: Druckknopf
- 30: Sitzmöbel
- 31: Kopfteilverstellung
- 32: Kopfteil
- 33: Antrieb
- 34: Antriebszahnrad
- 35: Durchführung
- 36: Kugelkalotten
- 37: Antrieb
- 38: Kopfteilzahnradelement
- 39: Zahnstange
- 40: Anschläge
- 41: Endschalter
- 50: Sitzmöbel
- 51,52: Antrieb
- 53: Kopfteil
- 54: Stellstrebe
- 55,56: Zahnkranz
- 57: Übertragung
- 58: Kopfteilverstellung

## Patentansprüche

1. Sitzmöbel (1,30,50), insbesondere Sessel oder Sofa, mit wenigstens einer Rückenlehne (4), wenigstens einem Kopfteil (5,32,53) und wenigstens einer Kopfteilverstellung (7,31,58), wobei das Kopfteil (5,32,53) über die Kopfteilverstellung (7,31,58) gegenüber der wenigstens einen Rückenlehne (4) wenigstens von einer unteren Stellung in eine obere Stellung verstellbar gehalten ist, wobei die Kopfteilverstellung (7,31,58) zwei höhenverstellbare, das Kopfteil (5,32,53) tragende und jeweils über eine separate Führung (11) geführte Stellstreben (6,54) zum Verstellen des wenigstens einen Kopfteils (5,32,53) von der unteren Stellung in die obere Stellung und zurück aufweist, wobei die Führungen (11) jeweils ein Zahnstangenelement (13) und ein beim Verstellen des Kopfteils (5,32,53) von der unteren Stellung in die obere Stellung und zurück mit dem Zahnstangenelement (13) kämmendes Zahnradelement (12) aufweisen und wobei die Zahnradelemente (12) über eine Synchronstrebe (14) drehfest miteinander verbunden sind,
**dadurch gekennzeichnet dass**
wenigstens ein Zahnradelement (12) eines der Zahnstangenelemente (13) während des Verstellens des Kopfteils (5,32,53) von der unteren Stellung in die obere Stellung und zurück formschlüssig hintergreifend ausgebildet ist.

2. Sitzmöbel nach Anspruch 1,
**dadurch gekennzeichnet, dass**
die Synchronstrebe (14) koaxial mit den Zahnradelementen (12) verbunden ist und dass, vorzugsweise, die Synchronstrebe (14) koaxial zu den Zahnradelementen (12) angeordnet ist.

3. Sitzmöbel nach Anspruch 1 oder 2,
**dadurch gekennzeichnet, dass**
wenigstens ein Zahnstangenelement (13) mehrteilig, insbesondere zweiteilig, ausgebildet, vorzugsweise aus Gleichteilen ausgebaut, ist und dass, vorzugsweise, die wenigstens zwei Einzelteile (22,23) des Zahnstangenelements (13) formschlüssig ineinander gesteckt sind.

4. Sitzmöbel nach einem der Ansprüche 1 bis 3,
**dadurch gekennzeichnet, dass**
wenigstens ein Zahnstangenelement (13) eine Reihe von Aufnahmen (26) zum Anbringen wenigstens eines Endschalters (27) zum Begrenzen des Verstellwegs des Kopfteils (5,32,53) in unterschiedlichen Positionen aufweist und/oder dass ein Endschalter (27) einen Druckknopf (29) zum Betätigen in eine Richtung wenigstens im Wesentlichen parallel zur Synchronstrebe (14) und/oder wenigstens im Wesentlichen parallel zur Drehachse des korrespondierenden Zahnradelements (12) aufweist.

5. Sitzmöbel nach einem der Ansprüche 1 bis 4,
**dadurch gekennzeichnet, dass**
wenigstens ein Zahnradelement (12) eines der Zahnstangenelemente (13) während des Verstellens des Kopfteils (5,32,53) von der unteren Stellung in die obere Stellung und zurück formschlüssig umgreifend ausgebildet ist und/oder dass wenigstens einem Zahnradelement (12) ein Dämpfungselement (21) direkt oder indirekt zugeordnet ist, das dem Verstellen des Kopfteils (5) nach unten einen höheren Wiederstand entgegensetzt als einer Verstellung des Kopfteils (5) nach oben.

6. Sitzmöbel nach einem der Ansprüche 1 bis 5,
**dadurch gekennzeichnet, dass**
die Stellstreben (6,54) über wenigstens eine, insbesondere gemeinsam mit dem Kopfteil (5,32,53) höhenverstellbare, Querstrebe (9,10) fest miteinander verbunden sind und dass, vorzugsweise, die Stellstreben (6,54) über die Querstrebe (10) mit den Führungen (11) verbunden sind.

7. Sitzmöbel nach einem der Ansprüche 1 bis 6,
**dadurch gekennzeichnet, dass**
ein Hubsteller (16) zum Arretieren des Kopfteils (5) wenigstens in der unteren und/oder der oberen Stellung vorgesehen ist und dass, vorzugsweise, der Hubsteller (16) mit der Querstrebe (10) und/oder der Synchronstrebe (14) verbunden ist.

8. Sitzmöbel nach Anspruch 7,
**dadurch gekennzeichnet, dass**
der Hubsteller (16) wenigstens in der unteren und/oder der oberen Stellung in Schwerkraftrichtung klemmend und/oder formschlüssig arretierbar ist und/oder dass der Hubsteller (16) zwischen der unteren und der oberen Stellung stufenweise oder stufenlos arretierbar ist.

9. Sitzmöbel nach einem der Ansprüche 1 bis 8,
**dadurch gekennzeichnet, dass**
die Kopfteilverstellung (31,58) über einen motorisch Antrieb (33,51) von wenigstens der unteren Stellung in die obere Stellung und zurück angetrieben ist und dass, vorzugsweise, der motorische Antrieb (33,51) dazu ausgebildet ist, die Synchronstange (14), insbesondere direkt, in Rotation zu versetzen und/oder wenigstens ein mit einem Zahnradelement (12) kämmendes Antriebszahnrad (34) anzutreiben.

10. Sitzmöbel nach Anspruch 9,
**dadurch gekennzeichnet, dass**
der motorische Antrieb (33,51) mit der Kopfteilverstellung (31,58) höhenverstellbar ausgebildet ist und dass, vorzugsweise, der motorische Antrieb (51) an der Synchronstrebe (14) und/oder der Querstrebe (10) festgelegt ist.

11. Sitzmöbel nach einem der Ansprüche 1 bis 10,
**dadurch gekennzeichnet, dass**
die Stellstreben (6,54) in der unteren Stellung des Kopfteils (5,32,53) und der oberen Stellung des Kopfteils (5,32,53) nach vorne bezogen auf das Sitzmöbel (1,30,50) geneigt sind und dass, vorzugsweise, die Stellstreben (6,54) in der oberen Stellung des Kopfteils (5,32,53) weiter nach vorne geneigt sind als in der unteren Stellung des Kopfteils (5,32,53) und/oder die Stellstreben (6,54) zwischen der unteren Stellung des Kopfteils (5,32,53) und der oberen Stellung des Kopfteils (5,32,53), insbesondere um die Führung (11) und/oder die Rückenlehne (4), schwenkbar von der Kopfteilverstellung (7,31,58) gehalten sind.

12. Sitzmöbel nach einem der Ansprüche 1 bis 11,
**dadurch gekennzeichnet, dass**
das Kopfteil (5,32,53) wenigstens von einer hinteren Stellung in eine vordere Stellung schwenkbar vorgesehen ist und dass, vorzugsweise, das Kopfteil (5) über wenigstens ein Rastgelenk (19) in der vorderen Stellung und/oder der hinteren Stellung arretierbar ist.

13. Sitzmöbel nach Anspruch 12,
**dadurch gekennzeichnet, dass**
ein motorischer Antrieb (37,52) zum Schwenken des wenigstens einen Kopfteils (32,53) vorgesehen ist, dass, vorzugsweise, der motorische Antrieb (37) in das Kopfteil (32) integriert ist und dass, weiter vorzugsweise, ein Kopfteilzahnradelement (38) des motorischen Antriebs (37) mit einem gebogenen Zahnstangenelement (39) eines schwenkbaren Abschnitts des Kopfteil (32) kämmt.

14. Sitzmöbel nach Anspruch 12 oder 13,
**dadurch gekennzeichnet, dass**
wenigstens ein Teil einer Stellstrebe (54) über den motorischen Antrieb (52) drehbar ausgebildet ist und dass eine Übertragung (57) zur Übertragung der Drehung der Stellstrebe (54) in ein Schwenken des wenigstens einen Kopfteils (53) vorgesehen ist.

15. Sitzmöbel nach einem der Ansprüche 1 bis 14,
**dadurch gekennzeichnet, dass**
die Kopfteilverstellung (7,31,58) wenigstens abschnittsweise senkrecht über wenigstens einem Sitz (3), insbesondere Sitzpolster, angeordnet ist und/oder dass die Stellstreben (6,54) wenigstens 0,5 m, vorzugsweise wenigstens 0,8 m, insbesondere wenigstens 1,2 m, voneinander beabstandet sind und/oder dass das Sitzmöbel (1,30,50) als Polstermöbel ausgebildet ist

## Claims

1. Seating furniture (1, 30, 50), in particular an armchair or sofa, with at least one backrest (4), at least one headrest (5, 32, 53) and at least one headrest adjustment (7, 31, 58), wherein the headrest (5, 32, 53) is held adjustable via the headrest adjustment (7, 31, 58) relative to the at least one backrest (4) at least from a lower position into an upper position, wherein the headrest adjustment (7, 31, 58) has two height-adjustable positioning struts (6, 54) bearing the headrest (5, 32, 53) and each guided via a separate guide (11) for adjusting the at least one headrest (5, 32, 53) from the lower position into the upper position and back, wherein the guides (11) each have a gear rack element (13) and a gear wheel element (12) meshing with the gear rack element (13) when adjusting the headrest (5, 32, 53) from the lower position to the upper position and back, and wherein the gear wheel elements (12) are connected to one another in a torsion-resistant manner via a synchronous strut (14), **characterised in that** at least one gear wheel element (12) is formed to engage behind one of the gear rack elements (13) in a form-fitting manner, while the headrest (5, 32, 53) is adjusted from the lower position into the upper position and back.

2. Seating furniture according to claim 1, **characterised in that** the synchronous strut (14) is coaxially connected to the gear wheel elements (12) and **in that**, preferably, the synchronous strut (14) is arranged coaxially to the gear wheel elements (12).

3. Seating furniture according to claim 1 or 2, **characterised in that** at least one gear rack element (13) is formed in multiple parts, in particular two parts, preferably is constructed of identical parts, and **in that**, preferably, the at least two individual parts (22, 23) of the gear rack element (13) are inserted into one another in a form-fitting manner.

4. Seating furniture according to any one of claims 1 to 3, **characterised in that** at least one gear rack element (13) has a series of recesses (26) for mounting at least one end switch (27) to limit an adjustment track of the headrest (5, 32, 53) in different positions and/or **in that** an end switch (27) has a push button (29) for actuating in a direction at least substantially parallel to the synchronous strut (14) and/or at least substantially parallel to the axis of rotation of the corresponding gear wheel element (12).

5. Seating furniture according to any one of claims 1 to 4, **characterised in that** at least one gear wheel element (12) is formed to engage around one of the gear rack elements (13), in a form-fitting manner, while the headrest (5, 32, 53) is adjusted from the lower position into the upper position and back and/or **in that** at least one gear wheel element (12) is directly or indirectly assigned a damping element (21) which opposes the downwards adjustment of the headrest (5) with a greater resistance than the upwards adjustment of the headrest (5).

6. Seating furniture according to any one of claims 1 to 5, **characterised in that** the positioning struts (6, 54) are fixedly connected to one another via at least one transverse strut (9, 10), in particular height-adjustable together with the headrest (5, 32, 53) and **in that**, preferably, the positioning struts (6, 54) are connected to the guides (11) via the transverse struts (10).

7. Seating furniture according to any one of claims 1 to 6, **characterised in that** a lift adjuster (16) for locking the headrest (5) at least in the lower and/or upper position is provided and **in that**, preferably, the lift adjuster (16) is connected to the transverse strut (10) and/or the synchronous strut (14).

8. Seating furniture according to claim 7, **characterised in that** the lift adjuster (16) can be locked in the gravitational direction in a clamped and/or form-fitting manner at least in the lower and/or the upper position and/or **in that** the lift adjuster (16) can be locked in a stepwise or continuous manner between the lower and the upper position.

9. Seating furniture according to any one of claims 1 to 8, **characterised in that** the headrest adjustment (31, 58) is driven via a motorised drive (33, 51) from at least the lower position into the upper position and back and **in that**, preferably, the motorised drive (33, 51) is formed so as to set into rotation, in particular directly, the synchronous strut (14) and/or to drive at least one drive gear wheel (34) meshing with a gear wheel element (12).

10. Seating furniture according to claim 9, **characterised in that** the motorised drive (33, 51) is formed to be height-adjustable with the headrest adjustment (31, 58) and **in that**, preferably, the motorised drive (51) is fixed on the synchronous strut (14) and/or the transverse strut (10).

11. Seating furniture according to any one of claims 1 to 10, **characterised in that** the positioning struts (6, 54) are tilted forwards in relation to the seating furniture (1, 30, 50) in the lower position of the headrest (5, 32, 53) and the upper position of the headrest (5, 32, 53) and **in that**, preferably, the positioning struts (6, 54) are tilted further forwards in the upper position of the headrest (5, 32, 53) than in the lower position of the headrest (5, 32, 53) and/or the positioning struts (6, 54) are held by the headrest adjustment (7, 31, 58) so as to swivel between the lower position of the headrest (5, 32, 53) and the upper position of the headrest (5, 32, 53), in particular around the guide (11) and/or the backrest (4).

12. Seating furniture according to any one of claims 1 to 11, **characterised in that** the headrest (5, 32, 53) is provided pivotable at least from a rear position into a front position and **in that**, preferably, the headrest (5) can be locked in the front position and/or the rear position via at least one locking hinge (19).

13. Seating furniture according to claim 12, **characterised in that** a motorised drive (37, 52) is provided for pivoting the at least one headrest (32, 53), **in that**, preferably, the motorised drive (37) is integrated into the headrest (32) and **in that**, further preferably, a headrest gear wheel element (38) of the motorised drive (37) meshes with a curved gear rack element (39) of a pivotable section of the headrest (32).

14. Seating furniture according to claim 12 or 13, **characterised in that** at least one part of a positioning strut (54) is formed to be rotatable via the motorised drive (52) and **in that** a transmission element (57) is provided for transmitting the rotation of the positioning strut (54) into a pivoting of the at least one headrest (53).

15. Seating furniture according to any one of claims 1 to 14, **characterised in that** the headrest adjustment (7, 31, 58) is arranged at least in sections perpendicularly above at least one seat (3), in particular a seat cushion, and/or **in that** the positioning struts (6, 54) are spaced at least 0.5 m, preferably at least 0.8 m, in particular at least 1.2 m, apart from one another, and/or **in that** the seating furniture (1, 30, 50) is formed as a piece of upholstered furniture.

## Revendications

1. Meuble d'assise (1, 30, 50), notamment un fauteuil ou canapé, avec au moins un dossier (4), au moins une partie de tête (5, 32, 53) et au moins un réglage de la partie de tête (7, 31, 58), la partie de tête (5, 32, 53) étant réglable, à l'aide du réglage de la partie de tête (7, 31, 58), par rapport audit moins un dossier (4) au moins d'une position inférieure à une position supérieure, le réglage de la partie de tête (7, 31, 58) présente deux tiges de réglage (6, 54) réglables en hauteur, portant la partie de tête (5, 32, 53) et guidées respectivement par un guidage séparé (11) pour déplacer ladite au moins une partie de tête (5, 32, 53) de la position inférieure à la position supérieure et inversement, les guidages (11) présentant respectivement un élément à crémaillère (13) et un élément de roue dentée (12) s'engrenant avec l'élément à crémaillère (13) lors du déplacement de la partie de tête (5, 32, 53) de la position inférieure à la position supérieure et inversement et les éléments de roue dentée (12) étant mutuellement reliés, solidairement en rotation, à l'aide d'une tige synchrone (14),
**caractérisé en ce qu'**au moins un élément de roue dentée (12), lors du déplacement de la partie de tête (5, 32, 53) de la position inférieure à la position supérieure et inversement, est conçu s'accrochant par l'arrière par liaison de forme un des éléments à crémaillère (13).

2. Meuble d'assise selon la revendication 1,
**caractérisé en ce que**
la tige synchrone (14) est reliée, de manière coaxiale, à l'élément de roue dentée (12) et **en ce que**, de préférence, la tige synchrone (14) est agencée, de manière coaxiale, sur l'élément de roue dentée (12).

3. Meuble d'assise selon la revendication 1 ou 2,
**caractérisé en ce que**
au moins un élément à crémaillère (13) est conçu en plusieurs parties, notamment en deux parties, de préférence à partir de parties identiques, et **en ce que**, de préférence lesdites au moins deux pièces individuelles (22, 23) de l'élément à crémaillère (13) sont emboîtées l'une dans l'autre par liaison de forme.

4. Meuble d'assise selon l'une des revendications 1 à 3,
**caractérisé en ce que**
au moins un élément à crémaillère (13) présente une série de logements (26) pour amener au moins un interrupteur de fin de course (27) pour limiter la course de réglage de la partie de tête (5, 32, 53) dans différentes positions et/ou **en ce qu'**un interrupteur de fin de course (27) présente un bouton-poussoir (29) pour l'actionnement dans une direction, au moins sensiblement parallèle à la tige synchrone (14) et/ou au moins sensiblement parallèle à l'axe de rotation de l'élément à crémaillère correspondant (12).

5. Meuble d'assise selon l'une des revendications 1 à 4,
**caractérisé en ce que**
au moins un élément de roue dentée (12), lors du déplacement de la partie de tête (5, 32, 53) de la position inférieure à la position supérieure et inversement, est conçu entourant par liaison de un des éléments à crémaillère (13) et/ou **en ce qu'**un élément amortisseur (21) est associé, directement ou indirectement, à au moins un élément de roue dentée (12), cet élément amortisseur (21) exerçant une plus grande résistance au déplacement de la partie de de tête (5) vers le bas qu'à un déplacement de l'élément de tête (5) vers le haut.

6. Meuble d'assise selon l'une des revendications 1 à 5,
**caractérisé en ce que**
les tiges de réglage (6, 54) sont reliées fermement entre elles par au moins une tige transversale (9, 10), en particulier réglable en hauteur, commune avec la partie de tête (5, 32, 53), et **en ce que**, de préférence, les tiges de réglage (6, 54) sont reliées aux guidages (11) à l'aide de la tige transversale (10).

7. Meuble d'assise selon l'une des revendications 1 à 6,
**caractérisé en ce que**
un actionneur de course (16) est prévu pour bloquer la partie de tête (5) au moins dans la position inférieure et/ou supérieure et **en ce que**, de préférence, l'actionneur de course (16) est relié à la tige transversale (10) et/ou à la tige synchrone (14).

8. Meuble d'assise selon le revendication 7,
**caractérisé en ce que**
l'actionneur de course (16) peut être bloqué au moins dans la position inférieure et/ou dans la position supérieure dans le sens de la force de gravité, par serrage et/ou par liaison de forme, et/ou **en ce que** l'actionneur de course (16) peut être bloqué, progressivement ou en continu, entre la position inférieure et la position supérieure.

9. Meuble d'assise selon l'une des revendications 1 à 8,
**caractérisé en ce que**
le réglage de la partie de tête (31, 58) est entraîné par un entraînement motorisé (33, 51) au moins de la position inférieure à la position supérieure et inversement, et **en ce que**, de préférence, l'entraînement motorisé (33, 51) est conçu pour mettre en rotation la tige synchrone (14), en particulier directement, et/ou pour entraîner au moins une roue dentée d'entraînement (34) en prise avec un élément de roue dentée (12).

10. Meuble d'assise selon le revendication 9,
**caractérisé en ce que**
l'entraînement motorisé (33, 51) est réalisé de manière à pouvoir être réglé en hauteur avec le réglage de la partie de tête (31, 58) et **en ce que**, de préférence, l'entraînement motorisé (51) est fixé à la tige synchrone (14] et/ou à la tige transversale (10).

11. Meuble d'assise selon l'une des revendications 1 à 10,
**caractérisé en ce que**
les tiges de réglage (6, 54) sont inclinées vers l'avant par rapport au meuble d'assise (1, 30, 50) dans la position inférieure de la partie de tête (5, 32, 53) et dans la position supérieure de la partie de tête (5, 32, 53) et **en ce que**, de préférence, les tiges de réglage (6, 54) sont plus inclinées vers l'avant dans la position supérieure de la partie de tête (5, 32, 53) que dans la position inférieure de la partie de tête (5, 32, 53) et/ou les tiges de réglage (6, 54) sont maintenues par le réglage de la partie de tête (7, 31, 58) de manière à pouvoir pivoter entre la position inférieure de la partie de tête (5, 32, 53) et la position supérieure de la partie de tête (5, 32, 53), en particulier autour du guidage (11) et/ou du dossier (4).

12. Meuble d'assise selon l'une des revendications 1 à 11,
**caractérisé en ce que**
l'on prévoit la partie de tête (5, 32, 53) de manière à pouvoir pivoter au moins d'une position arrière à une position avant et **en ce que**, de préférence, la partie de tête (5) peut être bloquée dans la position avant et/ou dans la position arrière par au moins une articulation d'arrêt (19).

13. Meuble d'assise selon le revendication 12,
**caractérisé en ce que**
**en ce que** l'on prévoit un entraînement motorisé (37, 52) pour le pivotement de l'au moins une partie de tête (32, 53), **en ce que**, de préférence, l'entraînement motorisé (37) est intégré dans la partie de tête (32) et **en ce que**, mieux encore, un élément à crémaillère de la partie de tête (38) de l'entraînement motorisé (37) s'engrène avec un élément à crémaillère courbé (39) d'une section pivotante de la partie de tête (32).

14. Meuble d'assise selon le revendication 12 ou 13,
**caractérisé en ce que**
au moins une partie d'une tige de réglage (54) est réalisée de manière à pouvoir tourner à l'aide de l'entraînement motorisé (52) et **en ce qu'**une transmission (57) est prévue pour transmettre la rotation de la tige de réglage (54) en un pivotement de ladite au moins une partie de tête (53).

15. Meuble d'assise selon l'une des revendications 1 à 14,
**caractérisé en ce que**
le réglage de la partie de tête (7, 31, 58) est agencé, au moins partiellement, perpendiculairement au-dessus d'au moins un siège (3), notamment un rembourrage de siège, et/ou que les tiges de réglage (6, 54) sont espacées d'au moins 0,5 m, de préférence d'au moins 0,8 m, en particulier au moins 1,2 m, et/ou **en ce que** le meuble d'assise (1, 30, 50) est conçu comme un meuble rembourré.
